(19) Europäisches Patentamt
European Patent Office
Office européen des brevets

(11) EP 1 834 560 B1

(12) **FASCICULE DE BREVET EUROPEEN**

(45) Date de publication et mention
de la délivrance du brevet:
**20.04.2011 Bulletin 2011/16**

(51) Int Cl.:
***A47J 43/07*** *(2006.01)*

(21) Numéro de dépôt: **07104073.7**

(22) Date de dépôt: **13.03.2007**

(54) **Appareil de préparation culinaire équipé de moyens de détection du balourd et de pesage**

Gerät zur Zubereitung von Speisen, das mit Mitteln zur Erkennung einer Unwucht und zum Wiegen ausgerüstet ist

Food preparation device equipped with means for detecting unbalance and for weighing

(84) Etats contractants désignés:
**AT BE BG CH CY CZ DE DK EE ES FI FR GB GR
HU IE IS IT LI LT LU LV MC MT NL PL PT RO SE
SI SK TR**

(30) Priorité: **13.03.2006 FR 0650840**

(43) Date de publication de la demande:
**19.09.2007 Bulletin 2007/38**

(73) Titulaire: **SEB SA
69130 Ecully (FR)**

(72) Inventeurs:
• **Leterrier, Thomas
50000, Saint-Lo (FR)**
• **Herrada, José Luis
38200, Vienne (FR)**
• **Beule, Mickaël
14400 Crouay (FR)**
• **Gerard, Emmanuel
61410 Couterne (FR)**

(74) Mandataire: **Blanchard, Eugène Gilles
Cabinet Beau de Loménie
51, avenue Jean Jaurès
B.P. 7073
69301 Lyon Cedex 07 (FR)**

(56) Documents cités:
**EP-A1- 0 396 059      EP-A1- 0 561 259
EP-A2- 0 972 483      EP-A2- 1 650 850
US-A- 4 114 286**

## Description

La présente invention concerne le domaine technique des appareils électroménagers de préparation culinaire comprenant un châssis supportant un récipient de travail à l'intérieur duquel est disposé un outil de travail entraîné en rotation par un moteur électrique solidaire du châssis.

De tels appareils électroménagers sont généralement conçus pour que le récipient et l'outil soient démontables pour permettre leur nettoyage et éventuellement leur remplacement en fonction des préparations culinaires envisagées.

De manière connue, un appareil électroménager du type ci-dessus peut être utilisé pour la préparation de pâte à pain. Dans le cadre d'une telle utilisation, l'outil peut alors être amené à malaxer dans le récipient de travail une quantité relativement importante d'ingrédients représentant un poids total de quelques kilos. Or, après un certain temps de malaxage, la pâte en cours de préparation est susceptible de s'agglomérer sur l'outil en une masse inégalement répartie qui peut éventuellement être projetée violemment par effet centrifuge contre la paroi périphérique du récipient de travail. Ces phénomènes d'agglomération et de projection, créant un balourd au niveau de l'outil de travail, sont alors susceptibles d'entraîner des mouvements et déplacements de l'appareil électroménager sur la surface sur laquelle il repose voire de déséquilibrer l'appareil électroménager jusqu'à entraîner un basculement ou une chute de ce dernier.

Il est donc apparu le besoin de disposer d'un appareil électroménager qui puisse être utilisé pour la préparation de diverses préparations culinaires et notamment de pâtes telles que la pâte à pain tout en étant susceptible de réduire autant que faire se peut les risques liés à l'apparition d'un balourd au niveau de l'outil de travail.

Afin d'atteindre cet objectif, une demande de brevet européen EP 1 650 850 a proposé un appareil électroménager de préparation culinaire comprenant : un châssis, un récipient de travail adapté sur le châssis, un outil de travail rotatif disposé dans le récipient de travail, un moteur électrique solidaire du châssis entraînant en rotation l'outil de travail, ainsi que des moyens de commande du moteur électrique. Selon cette demande de brevet, l'appareil comprend, en outre, des moyens de détection de l'apparition d'un balourd au niveau de l'outil de travail dans le récipient de travail pendant le fonctionnement du moteur électrique qui mettent en oeuvre des capteurs piézo-électriques associés à une unité de calcul pour émettre un signal d'apparition de balourd en fonction de l'évolution des efforts mesurés au niveau des capteurs pendant le fonctionnement du moteur électrique.

La mise en oeuvre de moyens de détection de l'apparition d'un balourd au niveau de l'outil de travail permet de détecter au plus tôt l'apparition d'un balourd le plus souvent avant même que ce dernier n'ait eu sur l'appareil électroménager un effet visible pour son utilisateur.

Il est apparu que si la mesure des efforts permet effectivement de détecter l'apparition d'un balourd, il pourrait être intéressant de permettre à l'utilisateur de l'appareil de prévenir l'apparition d'un balourd.

Afin d'atteindre cet objectif l'invention concerne un appareil électroménager de préparation culinaire selon la revendication 1. Selon l'invention, l'appareil électroménager de préparation culinaire est caractérisé en ce que les moyens de détection de l'apparition d'un balourd sont adaptés pour, à l'arrêt du moteur électrique, délivrer une information sur le poids des ingrédients éventuellement présents dans le récipient de travail, en fonction des efforts mesurés au niveau du ou des capteurs de force.

En effet, il a été constaté que l'apparition d'un balourd pouvait être lié à une surcharge de l'appareil. Ainsi, en délivrant une information sur les poids des ingrédients, il est possible d'éviter la mise en oeuvre dans le récipient de travail d'une quantité trop importante d'ingrédient et donc prévenir une surcharge de l'appareil entraînant un risque d'apparition rapide d'un balourd.

Un autre avantage de la communication, à l'utilisateur, d'une information quant au poids des produits présents dans le récipient est d'offrir à l'utilisateur la possibilité de doser en poids les ingrédients nécessaires à la recette directement dans le récipient de travail sans recourir à une balance extérieure. L'appareil électroménager selon l'invention permet donc de faire l'économie d'une balance pour la préparation de pâtes à pain ou à tartes notamment.

Selon une caractéristique de l'invention, le capteur de force est interposé entre le châssis et un support.

Selon une caractéristique de l'invention, les moyens de détection de l'apparition d'un balourd comprennent au moins trois capteurs de force situés sous le châssis de manière à former un polygone d'appui stable du châssis sur le support.

Les capteurs de force mis en oeuvre dans le cadre de cette variante de réalisation des moyens de détection d'apparition d'un balourd peuvent être utilisés de différentes façons de manière à détecter cette apparition. Ainsi, les moyens de détection peuvent identifier l'apparition d'une augmentation de la pression exercée sur les capteurs de force selon un mouvement tournant de même sens que le mouvement de rotation de l'outil comme le résultat d'un balourd au niveau de l'outil dans le récipient de travail.

Selon une autre forme de mise en oeuvre de l'invention, les moyens de détection sont adaptés pour, pendant le fonctionnement du moteur électrique, déterminer un poids total instantané de l'appareil électroménager à partir des efforts mesurés au niveau du ou des capteurs de force et pour émettre un signal d'apparition de balourd en fonction de la variation du poids total. En effet, les inventeurs ont eu le mérite de mettre en évidence que la variation du poids total de l'appareil électroménager, c'est-à-dire une variation dans le temps de la somme des efforts exercés sur les capteurs, correspond à l'apparition d'un balourd au niveau de l'outil de travail.

Selon une autre caractéristique de l'invention et afin de ne pas prendre en compte les erreurs de mesure au niveau des capteurs liés par exemple à des irrégularités des conditions d'alimentation électrique des capteurs ou encore à des interférences électromagnétiques, les moyens de détection sont adaptés pour déterminer un poids total moyen de l'appareil sur un intervalle de temps glissant et pour émettre un signal d'apparition de balourd en fonction de la variation de la moyenne du poids total moyen.

Dans le même sens et selon une autre caractéristique de l'invention, les moyens de détection sont adaptés pour déterminer un poids total de référence de l'appareil et pour émettre un signal d'apparition de balourd en fonction de la variation du poids total moyen par rapport au poids total de référence.

Dans certaines configurations matérielles, les inventeurs ont mis en évidence que l'apparition d'un balourd avait pour effet une diminution du poids total vu par les capteurs de force. Ainsi, selon une caractéristique de l'invention, les moyens de détection sont adaptés pour émettre un signal d'apparition de balourd lorsque :

■ le poids total moyen est inférieur au poids total de référence,
■ et la différence entre le poids moyen total et le poids total de référence est supérieure à une valeur prédéfinie.

Dans certains cas, il a été mis en évidence que des parasites et/ou des interférences électromagnétiques pouvaient entraîner des mesures correspondant à des allégements vus depuis les capteurs de force supérieurs aux allégements résultants de l'apparition d'un balourd. Afin d'éviter l'émission d'un signal d'apparition de balourd en cas d'interférences ou de parasites, les moyens de détection sont adaptés pour émettre un signal d'apparition de balourd lorsque :

■ le poids total moyen est inférieur au poids total de référence,
■ et la différence entre le poids moyen total et le poids total de référence est comprise entre une première valeur prédéfinie et une deuxième valeur prédéfinie.

Selon encore une autre caractéristique de l'invention et afin d'augmenter encore le phénomène d'allégement vu depuis les capteurs de force lors de l'apparition d'un balourd, le châssis de l'appareil électroménager selon l'invention comprend au moins une patte d'appui destinée à venir en contact avec le support en cas de mouvements du châssis de manière à diminuer les efforts exercés sur l'un au moins des capteurs de force pour augmenter l'efficacité de la détection de balourd.

Selon l'invention, le signal d'apparition de balourd émis par les moyens de détection peut être de différentes natures telles que visuelle et/ou sonore pour avertir l'utilisateur de l'appareil électroménager d'arrêter ce dernier ou de modifier son mode fonctionnement. Le signal d'apparition de balourd peut également être de nature électrique ou électronique pour être traité par les moyens de commande pour adapter de façon automatique le fonctionnement du moteur électrique à la nouvelle situation afin d'éviter un comportement dangereux de l'appareil électroménager.

Ainsi, selon une autre caractéristique de l'invention et dans une forme préférée de réalisation de l'appareil électroménager de préparation culinaire, les moyens de détection sont reliés aux moyens de commande qui sont adaptés pour modifier le mode de fonctionnement du moteur électrique en fonction du signal émis par les moyens de détection.

Dans le cadre de la forme préférée de réalisation de l'appareil électroménager de préparation culinaire conforme à l'invention et selon une autre caractéristique de l'invention, les moyens de commande sont adaptés pour permettre une sélection d'au moins deux vitesses ou modes de fonctionnement du moteur et en ce que les moyens de détection sont adaptés pour émettre un signal d'apparition de balourd en fonction de la vitesse ou du mode de fonctionnement sélectionné. Cette caractéristique de l'invention est particulièrement adaptée aux appareils électroménagers de préparation culinaire, dits multi-usages, dans la mesure où ils peuvent être utilisés avec des outils de travail de différentes natures induisant des comportements différents dont certains pourraient être détectés comme une apparition de balourd dans le cadre d'une préparation de pâte avec l'outil prévu à cet effet alors qu'ils correspondent à un fonctionnement normal avec l'outil effectivement utilisé.

Selon une autre caractéristique de l'invention, les moyens de commande de l'appareil électroménager sont adaptés pour :

■ permettre la sélection d'au moins deux vitesses de fonctionnement du moteur dont la plus faible est dite vitesse basse,
■ lors de la réception d'un signal d'apparition de balourd : soit faire fonctionner le moteur à une vitesse inférieure à sa vitesse de fonctionnement avant le signal s'il fonctionnait à une vitesse supérieure à la vitesse basse, soit interrompre le fonctionnement du moteur s'il fonctionnait à la vitesse basse.

Cette dernière caractéristique de l'invention permet de manière fort avantageuse d'adapter le fonctionnement de l'appareil électroménager sans pour autant l'arrêter systématiquement en cas d'apparition de balourd, ce qui procure un plus grand confort d'utilisation en évitant à l'utilisateur de devoir redémarrer l'appareil électroménager si la préparation culinaire n'a pas la consistance recherchée.

Selon encore une autre caractéristique de l'invention, les moyens de commande de l'appareil électroménager sont adaptés pour interrompre le fonctionnement du moteur lors de la réception d'un signal d'apparition de balourd. Cette caractéristique de l'invention est particulièrement adaptée aux appareils électroménagers de conception simple qui ne comportent par exemple qu'une seule vitesse de fonctionnement.

Selon une caractéristique de l'invention, l'appareil électroménager de préparation culinaire comprend un organe de commande qui est mobile entre une position de repos et une position active et qui est asservi en position de repos. Les moyens de commande sont alors adaptés pour, lorsque l'organe de commande est en position active, faire fonctionner le moteur sans tenir compte d'un éventuel signal d'apparition de balourd et/ou en neutralisant les moyens de détection. Cette caractéristique de l'invention permet à l'utilisateur de l'appareil électroménager de faire fonctionner ce dernier sans que le fonctionnement ne soit perturbé par les moyens de détection de balourd, la sécurité d'utilisation de l'appareil étant assurée par l'utilisateur lui-même qui arrête le fonctionnement du moteur électrique en relâchant son action sur l'organe de commande. Cette caractéristique est plus particulièrement adaptée au cas où l'action sur l'organe de commande permet de faire fonctionner le moteur électrique à sa vitesse et/ou puissance maximale.

Selon une autre caractéristique de l'invention et afin de permettre à l'utilisateur de gérer tous les modes de fonctionnement de l'appareil électroménager, ce dernier comprend des moyens de neutralisation des moyens de détection.

Bien entendu, les différentes caractéristiques de l'invention évoquées ci-dessus peuvent être mises en oeuvre les unes avec les autres selon différentes combinaisons lorsqu'elles ne sont pas exclusives les unes des autres ou incompatibles.

Par ailleurs, diverses autres caractéristiques de l'invention ressortent de la description faite ci-dessous en référence aux dessins annexés qui montrent, à titre d'exemples non limitatifs, des formes de réalisation de l'objet de l'invention.

La **fig. 1** est une perspective d'une première forme de réalisation d'un appareil électroménager de préparation culinaire selon l'invention.

La **fig. 2** est une perspective partiellement éclatée de l'appareil électroménager de préparation culinaire illustrée à la **fig. 1.**

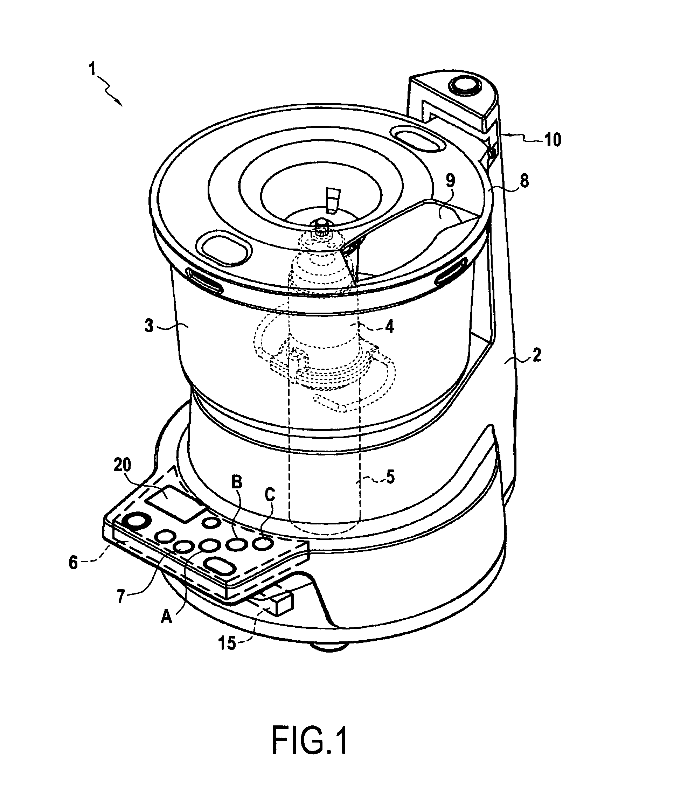

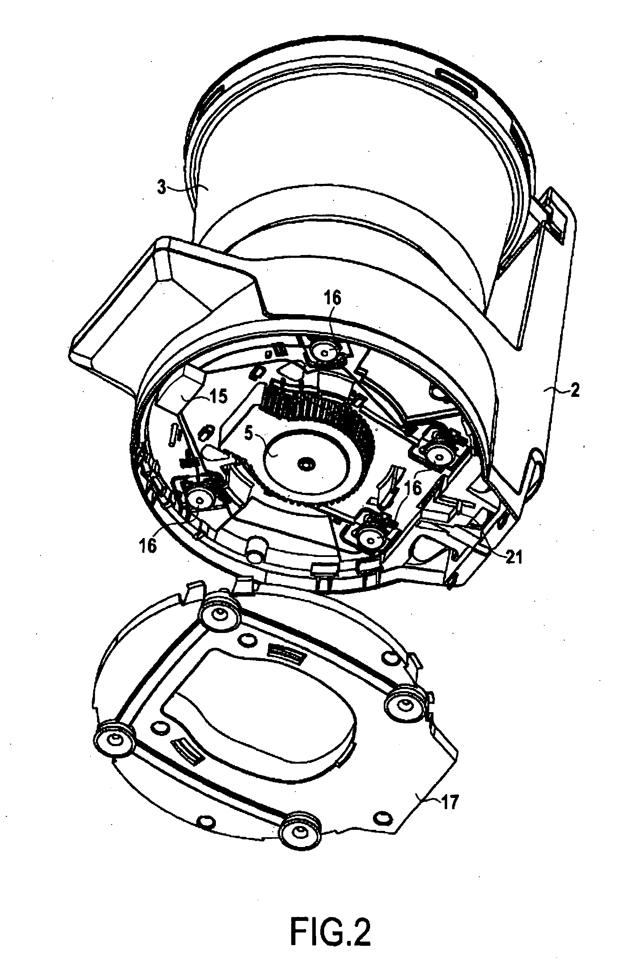

Un appareil électroménager de préparation culinaire tel qu'illustré à la figure **1** et désigné dans son ensemble par la référence **1** comprend un châssis **2** sur lequel est adapté un récipient de travail **3** de préférence amovible. De manière connue, le récipient **3** présente un orifice central non représenté pour le passage d'un arbre également non représenté de fixation d'un outil de travail **4** disposé à l'intérieur du récipient **3**. L'appareil électroménager comprend alors, comme le montre la figure **2,** un moteur électrique **5** solidaire du châssis **2** et adapté pour entraîner en rotation l'outil de travail **4** à l'intérieur du récipient **3**.

Afin d'assurer le pilotage du moteur **5,** l'appareil électroménager **1** comprend en outre des moyens de commande **6** associés à différentes touches **7** permettant de sélectionner des modes de fonctionnement et/ou des vitesses de fonctionnement du moteur électrique **5**. Selon l'exemple illustré, les moyens de commande **6** comprennent trois touches A,B,C permettant de sélectionner trois vitesses croissantes du moteur dont la plus basse sélectionnée à l'aide de la touche A correspond à une vitesse adaptée pour le pétrissage.

L'appareil électroménager **1** comprend également un couvercle **8** pourvu d'une fenêtre **9** d'introduction d'ingrédients culinaires dans le récipient **3**. Le couvercle **8** est adapté de manière amovible sur le récipient de travail **3** et se trouve associé à des moyens de sécurité **10** neutralisant le fonctionnement du moteur électrique **5** en cas d'absence du couvercle **8.**

L'appareil électroménager **1** ainsi constitué est particulièrement adapté pour des préparations culinaires du type pâte à pain ou pâte à tarte. Or, dans certaines conditions, après un temps excessif de malaxage à la vitesse A de pétrissage, la pâte à pain s'échauffe et prend une consistance visqueuse de sorte qu'elle s'agglomère de manière irrégulière autour de l'outil de travail **4** créant alors un balourd. La rotation de l'outil de travail **4** portant ce balourd engendre des oscillations qui déséquilibrent l'appareil électroménager **1** au point de le déplacer sur le plan de travail sur lequel il repose voire de le faire basculer.

Une tel phénomène de balourd apparaît également, et de façon encore plus rapide, lorsque l'utilisateur effectue le pétrissage de la pâte à une vitesse excessive, par exemple sur les vitesses B ou C.

Afin d'éviter un tel fonctionnement de l'appareil électroménager pouvant être dangereux pour son utilisateur, l'invention préconise de mettre en oeuvre des moyens **15** de détection de balourd.

Selon l'exemple illustré, les moyens de détection de balourd **15** comprennent quatre capteurs de force **16** disposés sous le châssis **2** de manière à définir un polygone, ici un quadrilatère, d'appui du châssis **2** sur un support **17**. De manière avantageuse, ces moyens de détection de balourd **15** sont alimentés directement par le réseau électrique après une adaptation de la tension par des résistances. Selon l'exemple illustré, le support **17** forme une embase destinée à être solidaire du châssis **2** et à se trouver interposée entre le châssis **2** et un plan de travail sur lequel l'appareil électroménager **1** est posé. Bien entendu, une telle embase **17** n'est pas nécessaire à la réalisation d'un appareil électroménager selon l'invention et les capteurs **16** pourraient être intégrés dans des pieds venant directement en appui sur le plan de travail supportant l'appareil électroménager **1**.

Les moyens de détection de balourd **15** en association avec les moyens de commande **6** sont mis en oeuvre de la manière suivante lors de l'utilisation de l'appareil électroménager **1.**

Lorsque le moteur électrique **5** ne fonctionne pas et après mise sous tension de l'appareil **1,** les capteurs **16** et les moyens de détection **15** calculent le poids des ingrédients introduits dans le récipient **3** pour l'afficher au niveau d'un écran **20** équipant les moyens de commande **6.** Ce poids est calculé comme étant la somme des forces s'appliquant sur les capteurs de force **16,** somme à laquelle il est soustrait le poids à vide de l'appareil **1** correspondant à la somme des forces appliquées aux capteurs **16** avant toute introduction d'ingrédients.

Lors de la mise en fonctionnement du moteur électrique **5,** les moyens **15** sont placés dans un mode de détection de balourd. Les moyens de détection mémorisent alors le poids total de l'appareil **1** juste avant le démarrage, ce qui constituera une première valeur d'un poids total de référence Pr. Par ailleurs, les moyens de détection **15** effectuent à des instants t régulièrement espacés, selon l'exemple illustré toutes les 120 ms, une mesure des forces s'exerçant simultanément sur les capteurs **16** et calculent la somme de ces forces qui correspond au poids total instantané Pi(t) de l'appareil électroménager **1.** Les moyens de détection **15** calculent alors une moyenne glissante sur un intervalle de temps donné, correspondant ici aux cinq dernières mesures, un poids moyen Pm(t) de l'appareil électroménager **1.** Les moyens de détection actualisent également le poids total de référence Pr en calculant ce dernier selon la formule :

$$Pr(t) = (9Pr(t-1)+Pm(t))/10$$

Pour détecter l'apparition d'un balourd, les moyens de détection **15** comparent le poids total moyen Pm(t) au poids total de référence Pr(t). Une diminution brutale, supérieure à une première valeur donnée, du poids moyen par rapport au poids de référence peut traduire l'apparition d'un balourd dans la mesure où cette diminution reste inférieure à une deuxième valeur donnée. En effet, des diminutions supérieures à cette deuxième valeur donnée sont considérées comme résultant d'erreurs de mesure où de parasites.

Selon l'exemple illustré, la détection du balourd s'effectue également en fonction des modes de fonctionnement de l'appareil électroménager **1.**

Ainsi, lorsque le moteur **5** fonctionne à sa vitesse maximale **C** ou à sa vitesse intermédiaire **B** et que les moyens de détection **15** détectent une diminution du poids total moyen Pm(t) supérieure à 600 g mais inférieure à 6 kg, alors les moyens de détection émettent à destination des moyens de commande **6** un signal d'apparition de balourd et les moyens de commande réduisent de manière automatique la vitesse du moteur **5** pour le faire fonctionner à sa vitesse basse ou minimale **A.**

De la même manière, lorsque le moteur **5** fonctionne à sa vitesse basse **A** et que les moyens de détection **15** détectent une diminution du poids total moyen Pm(t) supérieure à 800 g mais inférieure à 6 kg, alors les moyens de détection émettent à destination des moyens de commande **6** un signal d'apparition de balourd et les moyens de commande stoppent le fonctionnement du moteur électrique **5.**

En revanche, lorsque le moteur **5** fonctionne, quelle que soit sa vitesse, et que les moyens de détection **15** détectent une diminution de poids supérieure à 6 kg, alors les moyens de détection **15** n'émettent aucun signal d'apparition de balourd car l'expérience a montré qu'une telle diminution résulte de parasites au niveau de l'alimentation électrique de l'appareil **1.**

Selon une forme préférée de réalisation et afin d'augmenter le phénomène d'allégement en cas d'apparition d'un balourd, le châssis possède une patte ou butée **21** destinée à venir en appui sur le support **17** sous l'effet du balourd. Ainsi, lorsque la butée **21** est en appui, les efforts mesurés au niveau des capteurs **16** se trouvent diminués, ce qui est interprété par les moyens de détection **15** comme un allégement et donc comme une apparition de balourd.

Bien entendu, diverses modifications pourraient être apportées à l'appareil électroménager selon l'invention dans cadre des revendications.

## Revendications

1. Appareil électroménager de préparation culinaire comprenant :

   - un châssis **(2),**
   - un récipient de travail **(3)** adapté sur le châssis **(2),**
   - un outil **(4)** de travail rotatif disposé dans le récipient de travail **(3),**
   - un moteur électrique **(5)** solidaire du châssis **(2)** entraînant en rotation l'outil de travail **(4),**
   - des moyens **(6)** de commande du moteur électrique **(5),**
   - des moyens **(15)** de détection de l'apparition d'un balourd au niveau de l'outil de travail **(4)** dans le récipient de travail **(3)** pendant le fonctionnement du moteur électrique **(5),**
   - les moyens **(15)** de détection de l'apparition d'un balourd comprenant au moins un capteur de force **(16)** et étant adaptés pour émettre un signal d'apparition de balourd en fonction de l'évolution des efforts mesurés au niveau du capteur de force **(16)** pendant le fonctionnement du moteur électrique **(5),**
   **caractérisé en ce que**
   - les moyens **(15)** de détection de l'apparition d'un balourd sont adaptés pour, à l'arrêt du moteur électrique, délivrer une information sur le poids des ingrédients éventuellement présents dans le récipient de travail, en fonction des efforts mesurés au niveau du ou des capteurs de force **(16).**

**2.** Appareil électroménager de préparation culinaire selon la revendication 1, **caractérisé en ce que** ledit capteur de force est interposé entre le châssis (2) et un support (17).

**3.** Appareil électroménager de préparation culinaire selon la revendication 2, **caractérisé en ce que** les moyens **(15)** de détection de l'apparition d'un balourd comprennent au moins trois capteurs de force **(16)** situés sous le châssis **(2)** de manière à former un polygone d'appui stable du châssis sur le support **(17).**

**4.** Appareil électroménager de préparation culinaire selon l'une des revendications 1 à 3, **caractérisé en ce que** les moyens **(15)** de détection de l'apparition d'un balourd sont adaptés pour, pendant le fonctionnement du moteur électrique, déterminer un poids total instantané de l'appareil électroménager à partir des efforts mesurés au niveau du ou des capteurs de force **(16)** et pour émettre un signal d'apparition de balourd en fonction de la variation du poids total.

**5.** Appareil électroménager de préparation culinaire selon la revendication 4, **caractérisé en ce que** les moyens **(15)** de détection de l'apparition d'un balourd sont adaptés pour déterminer un poids total moyen de l'appareil sur un intervalle de temps glissant et pour émettre un signal d'apparition de balourd en fonction de la variation de la moyenne poids total moyen.

**6.** Appareil électroménager de préparation culinaire selon la revendication 5, **caractérisé en ce que** les moyens **(15)** de détection d'apparition d'un balourd sont adaptés pour déterminer un poids total de référence de l'appareil et pour émettre un signal d'apparition de balourd en fonction de la variation du poids total moyen par rapport au poids total de référence.

**7.** Appareil électroménager de préparation culinaire selon la revendication 6, **caractérisé en ce que** les moyens **(15)** de détection de l'apparition d'un balourd sont adaptés pour émettre un signal d'apparition de balourd lorsque :

■ le poids total moyen est inférieur au poids total de référence,
■et la différence entre le poids moyen total et le poids total de référence est supérieure à une valeur prédéfinie.

**8.** Appareil électroménager de préparation culinaire selon la revendication 6 ou 7, **caractérisé en ce que** les moyens **(15)** de détection de l'apparition d'un balourd sont adaptés pour émettre un signal d'apparition de balourd lorsque :

■ le poids total moyen est inférieur au poids total de référence,
■ et la différence entre le poids moyen total et le poids total de référence est comprise entre une première valeur prédéfinie et une deuxième valeur prédéfinie.

**9.** Appareil électroménager de préparation culinaire selon la revendication 3 et la revendication 7 ou 8, **caractérisé en ce que** le châssis **(2)** comprend au moins une patte d'appui **(20)** destinée à venir en contact avec le support en cas de mouvements du châssis de manière à diminuer les efforts exercés sur l'un au moins des capteurs de force **(16)** pour augmenter l'efficacité de la détection de balourd.

**10.** Appareil électroménager de préparation culinaire selon l'une quelconque des revendications 1 à 9, **caractérisé en ce que** les moyens de détection **(15)** sont reliés aux moyens de commande **(6)** qui sont adaptés pour modifier le mode de fonctionnement du moteur électrique **(5)** en fonction du signal émis par les moyens de détection **(15).**

**11.** Appareil électroménager de préparation culinaire selon la revendication 10, **caractérisé en ce que** les moyens de commande **(6)** sont adaptés pour permettre une sélection d'au moins deux vitesses (A,B) ou modes de fonctionnement du moteur et **en ce que** les moyens de détection **(15, 25)** sont adaptés pour émettre un signal d'apparition de balourd en fonction de la vitesse ou du mode de fonctionnement sélectionné.

**12.** Appareil électroménager de préparation culinaire selon la revendication 10 ou 11, **caractérisé en ce que** les moyens de commande **(6)** sont adaptés pour :

■ permettre la sélection d'au moins deux vitesses (A,B) de fonctionnement du moteur dont la plus faible est dite vitesse basse (A),
■ lors de la réception d'un signal d'apparition de balourd : soit faire fonctionner le moteur à une vitesse inférieure à sa vitesse de fonctionnement avant le signal s'il fonctionnait à une vitesse supérieure à la vitesse basse, soit interrompre le fonctionnement du moteur s'il fonctionnait à la vitesse basse.

**13.** Appareil électroménager de préparation culinaire selon la revendication 10 ou 11, **caractérisé en ce que** les moyens de commande **(6)** sont adaptés pour interrompre le fonctionnement du moteur lors de la réception d'un signal d'apparition de balourd.

**14.** Appareil électroménager de préparation culinaire selon l'une des revendications 10 à 13, **caractérisé en ce qu'**il comprend un organe de commande **(26)** qui est mobile entre une position de repos et une position active et qui est asservi en position de repos, et **en ce que** les moyens de commande **(6)** sont adaptés pour, lorsque l'organe de commande est en position active, faire fonctionner le moteur sans tenir compte d'un éventuel signal d'apparition de balourd et/ou en neutralisant les moyens de détection **(15,25).**

**15.** Appareil électroménager de préparation culinaire selon l'une des revendications 1 à 14, **caractérisé en ce qu'**il comprend des moyens de neutralisation des moyens de détection.

**Claims**

**1.** A food-preparation electric household appliance comprising:

· a stand (2);
· a work receptacle (3) fitted on the stand (2);
· a rotary work tool (4) placed in the work receptacle (3);
· an electric motor (5) secured to the stand (2) for driving the work tool (4) in rotation;
control means (6) for controlling the electric motor (5); and
· detector means (15) for detecting the appearance of an unbalance of the work tool (4) in the work receptacle (3) while the electric motor (5) is in operation;
· the detector means (15) for detecting the appearance of an unbalance comprising at least one force sensor (16) and being adapted to issue an unbalance-appearance signal as a function of the variation in the forces measured by the force sensor (16) while the electric motor (5) is in operation;

the appliance being **characterized in that**:

· the detector means (15) for detecting the appearance of an unbalance are adapted, on stopping of the electric motor, to deliver information about the weight of the ingredients, if any, present in the work receptacle, as a function of the forces measured by the force sensor(s) (16).

**2.** A food-preparation electric household appliance according to claim 1, **characterized in that** said force sensor is interposed between the stand (2) and a support (17).

**3.** A food-preparation electric household appliance according to claim 2, **characterized in that** the detector means (15) for detecting the appearance of an unbalance comprise at least three force sensors (16) situated under the stand (2) so as to form a stable bearing polygon for the stand on the support (17).

**4.** A food-preparation electric household appliance according to any one of claims 1 to 3, **characterized in that** the detector means (15) for detecting the appearance of an unbalance are adapted, while the electric motor is in operation, to determine the total instantaneous weight of the electric household appliance on the basis of forces measured by the force sensor(s) (16) in order to issue an unbalance-appearance signal as a function of variation in the total weight.

**5.** A food-preparation electric household appliance according to claim 4, **characterized in that** the detector means (15) for detecting the appearance of an unbalance are adapted to determine the total mean weight of the appliance over a moving time interval and to emit an unbalance-appearance signal as a function of the variation in the average mean total weight.

**6.** A food-preparation electric household appliance according to claim 5, **characterized in that** the detector means (15) for detecting the appearance of an unbalance are adapted to determine a reference total weight for the appliance and to issue an unbalance-appearance signal as a function of the variation of the mean total weight relative to the reference total weight.

**7.** A food-preparation electric household appliance according to claim 6, **characterized in that** the detector means (15) for detecting the appearance of an unbalance are adapted to issue an unbalance-appearance signal when:

· the mean total weight is less than the reference total weight; and
· the difference between the mean total weight and the reference total weight is greater than a predefined value.

**8.** A food-preparation electric household appliance according to claim 6 or claim 7, **characterized in that** the detector means (15) for detecting the appearance of an unbalance are adapted to issue an unbalance-appearance signal when:

· the mean total weight is less than the reference total weight; and
· the difference between the mean total weight and the reference total weight lies between a first predetermined value and a second predetermined value.

9. A food-preparation electric household appliance according to claim 3 and claim 7 or claim 8, **characterized in that** the stand (2) includes at least one bearing tab (20) for coming into contact with the support in the event of the stand moving, thereby diminishing the forces exerted on at least one of the force sensors (16) in order to increase the effectiveness of unbalance detection.

10. A food-preparation electric household appliance according to any one of claims 1 to 9, **characterized in that** the detector means (15) are connected to the control means (6) that are adapted to modify the operating mode of the electric motor (5) as a function of the signal issued by the detector means (15).

11. A food-preparation electric household appliance according to claim 10, **characterized in that** the control means (6) are adapted to enable a selection to be made between at least two speeds (A, B) or operating modes of the motor, and **in that** the detector means (15, 25) are adapted to issue an unbalance-appearance signal as a function of the selected speed or mode of operation.

12. A food-preparation electric household appliance according to claim 10 or claim 11, **characterized in that** the control means (6) are adapted to:

    · enable at least two operating speeds (A, B) of the motor to be selected, with the slowest speed being referred to as low speed (A); and
    · on receiving an unbalance-appearance signal: either causing the motor to operate at a speed slower than its operating speed before the signal if it was operating at a speed higher than the low speed, or else switching the motor off if it was operating at the low speed.

13. A food-preparation electric household appliance according to claim 10 or claim 11, **characterized in that** the control means (6) are adapted to switch the motor off on receiving an unbalance-appearance signal.

14. A food-preparation electric household appliance according to any one of claims 10 to 13, **characterized in that** it includes a control member (26) that is movable between a rest position and an active position and that is servo-controlled into the rest position, and **in that** the control means (6) are adapted, when the control member is in an active position, to cause the motor to operate without taking account of any unbalance-appearance signal and/or while neutralizing the detector means (15, 25).

15. A food-preparation electric household appliance according to any one of claims 1 to 14, **characterized in that** it includes means for neutralizing the detector means.

## Patentansprüche

1. Elektrisches Haushaltsgerät für die Zubereitung von Speisen, umfassend:

    - ein Gestell (2),
    - einen auf das Gestell (2) aufgesetzten Arbeitsbehälter (3),
    - ein rotierendes Arbeitswerkzeug (4), das in dem Arbeitsbehälter (3) angeordnet ist,
    - einen mit dem Gestell (2) fest verbundenen Elektromotor (5), der das Arbeitswerkzeug (4) drehantreibt,
    - Mittel (6) zum Steuern des Elektromotors (5),
    - Mittel (15) zur Erfassung des Auftretens einer Unwucht im Bereich des Arbeitswerkzeugs (4) in dem Arbeitsbehälter (3) während des Betriebs des Elektromotors (5),
    - wobei die Mittel (15) zur Erfassung des Auftretens einer Unwucht wenigstens einen Kraftsensor (16) umfassen und geeignet sind, in Abhängigkeit von der Entwicklung der im Bereich des Kraftsensors (16) während des Betriebs des Elektromotors (5) gemessenen Kräfte ein Signal für das Auftreten einer Unwucht auszusenden, **dadurch gekennzeichnet, daß**
    - die Mittel (15) zur Erfassung des Auftretens einer Unwucht geeignet sind, bei Anhalten des Elektromotors eine Information über das Gewicht der eventuell in dem Arbeitsbehälter vorhandenen Zutaten, in Abhängigkeit von den im Bereich des Kraftsensors oder der Kraftsensoren (16) gemessenen Kräften zu liefern.

2. Elektrisches Haushaltsgerät für die Zubereitung von Speisen, nach Anspruch 1, **dadurch gekennzeichnet, daß** der Kraftsensor zwischen dem Gestell (2) und einem Träger (17) angebracht ist.

3. Elektrisches Haushaltsgerät für die Zubereitung von Speisen, nach Anspruch 2, **dadurch gekennzeichnet, daß** die Mittel (15) zur Erfassung des Auftretens einer Unwucht wenigstens drei Kraftsensoren (16) umfassen, die unter dem Gestell (2) derart angeordnet sind, daß sie ein Vieleck zur stabilen Auflage des Gestells auf dem Träger (17) bilden.

4. Elektrisches Haushaltsgerät für die Zubereitung von Speisen, nach einem der Ansprüche 1 bis 3, **dadurch gekennzeichnet, daß** die Mittel (15) zur Erfassung des Auftretens einer Unwucht geeignet sind, während des Betriebs des Elektromotors ein momentanes Gesamtgewicht des elektrischen Haushaltsgerätes anhand der im Bereich des Kraftsensors oder der Kraftsensoren (16) gemessenen Kräfte zu bestimmen und in Abhängigkeit von der Änderung des Gesamtgewichts ein Signal für das Auftreten einer Unwucht zu senden.

5. Elektrisches Haushaltsgerät für die Zubereitung von Speisen, nach Anspruch 4, **dadurch gekennzeichnet, daß** die Mittel (15) zur Erfassung des Auftretens einer Unwucht geeignet sind, ein durchschnittliches Gesamtgewicht des Gerätes über ein gleitendes Zeitfenster zu bestimmen und in Abhängigkeit von der Änderung des Mittelwertes des durchschnittlichen Gesamtgewichts ein Signal für das Auftreten einer Unwucht zu senden.

6. Elektrisches Haushaltsgerät für die Zubereitung von Speisen, nach Anspruch 5, **dadurch gekennzeichnet, daß** die Mittel (15) zur Erfassung des Auftretens einer Unwucht geeignet sind, ein Referenzgesamtgewicht des Gerätes zu bestimmen und in Abhängigkeit von der Änderung des durchschnittlichen Gesamtgewichts gegenüber dem Referenzgesamtgewicht ein Signal für das Auftreten einer Unwucht zu senden.

7. Elektrisches Haushaltsgerät für die Zubereitung von Speisen, nach Anspruch 6, **dadurch gekennzeichnet, daß** die Mittel (15) zur Erfassung des Auftretens einer Unwucht geeignet sind, ein Signal für das Auftreten einer Unwucht dann auszusenden, wenn:

    - das durchschnittliche Gesamtgewicht niedriger als das Referenzgesamtgewicht ist und
    - die Differenz zwischen dem durchschnittlichen Gesamtgewicht und dem Referenzgesamtgewicht größer als ein vordefinierter Wert ist.

8. Elektrisches Haushaltsgerät für die Zubereitung von Speisen, nach Anspruch 6 oder 7, **dadurch gekennzeichnet, daß** die Mittel (15) zur Erfassung des Auftretens einer Unwucht geeignet sind, ein Signal für das Auftreten einer Unwucht dann auszusenden, wenn:

    - das durchschnittliche Gesamtgewicht niedriger als das Referenzgesamtgewicht ist und
    - die Differenz zwischen dem durchschnittlichen Gesamtgewicht und dem Referenzgesamtgewicht zwischen einem ersten vordefinierten Wert und einem zweiten vordefinierten Wert liegt.

9. Elektrisches Haushaltsgerät für die Zubereitung von Speisen, nach Anspruch 3 und Anspruch 7 oder 8, **dadurch gekennzeichnet, daß** das Gestell (2) wenigstens eine Anlagelasche (21) aufweist, die dazu bestimmt ist, im Fall von Bewegungen des Gestells mit dem Träger in Kontakt zu kommen, so daß die auf wenigstens einen der Kraftsensoren (16) ausgeübten Kräfte verringert werden, um die Wirksamkeit der Unwuchterfassung zu erhöhen.

10. Elektrisches Haushaltsgerät für die Zubereitung von Speisen, nach einem der Ansprüche 1 bis 9, **dadurch gekennzeichnet, daß** die Erfassungsmittel (15) mit den Steuermitteln (6) verbunden sind, welche geeignet sind, die Betriebsart des Elektromotors (5) in Abhängigkeit des durch die Erfassungsmittel (15) ausgesandten Signals zu ändern.

11. Elektrisches Haushaltsgerät für die Zubereitung von Speisen, nach Anspruch 10, **dadurch gekennzeichnet, daß** die Steuermittel (6) geeignet sind, eine Auswahl von wenigstens zwei Geschwindigkeiten (A, B) oder Betriebsarten des Motors zu ermöglichen, und daß die Erfassungsmittel (15, 25) geeignet sind, in Abhängigkeit von der gewählten Geschwindigkeit oder Betriebsart ein Signal für das Auftreten einer Unwucht auszusenden.

12. Elektrisches Haushaltsgerät für die Zubereitung von Speisen, nach Anspruch 10 oder 11, **dadurch gekennzeichnet, daß** die Steuermittel (6) geeignet sind:

    - die Auswahl von wenigstens zwei Betriebsgeschwindigkeiten (A, B) des Motors, von denen die geringste die sogenannte niedrige Geschwindigkeit (A) ist, zu ermöglichen,
    - bei Empfang eines Signals für das Auftreten einer Unwucht, entweder den Motor mit einer niedrigeren Geschwindigkeit als seiner Betriebsgeschwindigkeit vor dem Signal laufen zu lassen, wenn er mit einer höheren Geschwindigkeit als der niedrigen Geschwindigkeit lief, oder den Betrieb des Motors zu unterbrechen, wenn er mit der niedrigen Geschwindigkeit lief.

13. Elektrisches Haushaltsgerät für die Zubereitung von Speisen, nach Anspruch 10 oder 11, **dadurch gekennzeichnet, daß** die Steuermittel (6) geeignet sind, den Betrieb des Motors bei Empfang eines Signals für das Auftreten einer Unwucht zu unterbrechen.

14. Elektrisches Haushaltsgerät für die Zubereitung von Speisen, nach einem der Ansprüche 10 bis 13, **dadurch gekennzeichnet, daß** es ein Betätigungsorgan (26) umfaßt, das zwischen einer Ruhestellung und einer aktiven Stellung beweglich und in der Ruhestellung verriegelt ist, und daß die Steuermittel (6) geeignet sind, den Motor dann, wenn das Betätigungsorgan sich in der aktiven Stellung befindet, ohne Rücksicht auf ein mögliches Signal für das Auftreten einer Unwucht und/oder durch Neutralisieren der Erfassungsmittel (15, 25) laufen zu lassen.

15. Elektrisches Haushaltsgerät für die Zubereitung von Speisen, nach einem der Ansprüche 1 bis 14, **dadurch gekennzeichnet, daß** es Mittel zum Neutralisieren der Erfassungsmittel umfaßt.

FIG.1

FIG.2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1650850 A